# EUROPEAN PATENT APPLICATION

(11) **EP 1 987 905 A1**
(43) Date of publication of application: **05.11.2008**
(21) Application number: 07024795.2
(22) Date of filing: 20.12.2007
(51) Int. Cl.: B23K 11/31

(54) **Electric driving unit for X-type gun**

(30) Priority: 02.05.2007 JP 2007121573
(71) Applicant: Obara Corporation, Ayase-shi Kanagawa-ken 252-1104 (JP)
(72) Inventor: Sato, Yoshio, Ayase-shi Kanagawa-ken 252-1104 (JP)
(74) Representative: Goddar, Heinz J.

(57) **Abstract**

There is provided an electric driving unit for X-type gun made up by combining a pressure application driving body (8) with a motor (12), wherein the electric driving unit is attached to a fixed arm (3) or a gun bracket (6) utilizing a housing of the motor (12), thereby obtaining the electric driving unit for X-type gun capable of rendering the electric driving unit to be compact and held stably, and causing the maintenance thereof to be executed with reliability and ease. The electric driving unit for X-type gun, wherein the pressure application driving body (8) and a motor (12) are combined with each other, comprises: a rotary shaft (13) provided in the motor (12) and formed of a hollow shaft to which a screw shaft (14) is secured; a guide bearing (18) provided at the front end side of the motor (12) for guiding the pressure application shaft (9); said pressure application shaft (9) having a part to be driven by the motor (12) and pulled into the motor (12); a hollow part (17) for containing therein a tip end side of the screw shaft (14); a nut (16) to be threaded with the screw shaft (14); and a bearing (11) provided at the front thereof for causing the rear end of the swing arm (1) to be journalled to the pressure application shaft (9) by a pivotal shaft (10); said electric driving unit for X-type gun still further comprising a housing (20) provided at the front end of the motor (12); a bearing (19) provided in the housing (20) for bearing a load applied to the rotary shaft (13) of the motor (12) in the axial direction thereof; and a bearing (21) provided in the housing (20) for causing the housing (20) to be journalled to the fixed arm (3) or causing the housing (20) to be journalled to the gun bracket (6) by a pivotal shaft (22).

## Description

### FIELD OF THE INVENTION

The invention relates to an electric driving unit for X-type gun having two gun arms provided with electrodes which are opposite to each other at the tip ends thereof, wherein a middle portion of a swing arm that is one arm is journalled to a gun bracket by a pivotal shaft, and a rear end of the swing arm is connected to a pressure application shaft provided in a pressure application driving body while a rear end of a fixed arm that is the other arm is fixed to the pressure application driving body or the gun bracket.

### BACKGROUND OF THE INVENTION

There has been an electric driving unit for X-type gun having two gun arms provided with electrodes which are opposite to each other at the tip ends thereof, wherein a middle portion of a swing arm that is one arm is journalled to a gun bracket by a pivotal shaft, and a rear end of the swing arm is connected to a pressure application shaft provided in a pressure application driving body while a rear end of a fixed arm that is the other arm is fixed to the gun bracket, and the pressure application driving body is held by the gun bracket by way of an attachment member (see, for example, Utility Model Registration No. 3112742).

Further, there has been a pressure application driving unit of welding equipment comprising a pressure application driving body and a motor which are combined with each other, a pressure application shaft having a part which is driven by the motor and pulled in the motor, a rotary shaft serving as a rotator of the motor being formed of a hollow shaft, a screw shaft fixed inside the rotary shaft, a nut threaded with the screw shaft being provided in the pressure application shaft, wherein a hollow part in which the tip end side of the screw shaft is contained is formed inside the pressure application shaft (see, for example, JP 2001-293577A).

With the electric X-type gun, as described, for example, in the Utility Model Registration No. 3112742, the pressure application driving body is attached to the front portion of the motor, and a screw shaft which is rotated by the rotation of a motor is threaded with a nut provided in the pressure application shaft in the pressure application driving body, to convert the rotary motion of the motor into a reciprocal motion of the pressure application shaft, thereby forming a pressure application driving unit. Such a pressure application driving unit is provided with the pressure application driving body disposed at the front portion of the motor and attached to the gun bracket by the attachment member, so that the motor is positioned behind the attachment member of the pressure application driving body, thereby arising a possibility of causing the pressure application driving unit to be long in the entire length and large-sized, and also causing the holding of the pressure application driving unit to be unstable.

Although the pressure application driving unit of the welding equipment, as described, for example, in JP 2001-293577A, is structured such that the pressure application driving body and the motor are combined with each other to cause the pressure application driving unit to be short in the entire length, but it has no consideration of a position where the driving unit is provided in the welding equipment, and there is no suggestion of a technical idea of attachment of the gun bracket utilizing the housing of the motor.

### SUMMARY OF THE INVENTION

The invention has been developed in view of the problems of the prior art, and it is an object to combine a pressure application driving body with a motor to make up an electric driving unit for X-type gun, wherein the electric driving unit is attached to the gun bracket utilizing a housing of the motor, thereby obtaining the electric driving unit for X-type gun capable of rendering the electric driving unit to be compact and held stably, and causing the maintenance thereof to be executed with reliability and ease.

It is another object of the invention to provide an electric driving unit for X-type gun capable of rotating a screw shaft through a manual operation hole when power fails or the motor and the pressure application driving portion are troubled.

To achieve the above object, the electric driving unit for X-type gun of the invention comprising a pressure application driving body and a motor which are combined with each other, and a rotary shaft provided in the motor and formed of a hollow shaft to which a screw shaft is secured; a guide bearing provided at the front end side of the motor for guiding the pressure application shaft; said pressure application shaft having: a part to be driven by the motor and pulled into the motor; a hollow part for containing therein a tip end side of the screw shaft; a nut to be threaded with the screw shaft; and a bearing provided at the front thereof for causing the rear end of the swing arm to be journalled to the pressure application shaft by a pivotal shaft; characterized in that said electric driving unit for X-type gun still further comprises: a housing provided at the front end of the motor; a bearing provided in the housing for bearing a load applied to the rotary shaft of the motor in the axial direction thereof; and a bearing provided in the housing for causing the housing to be journalled to the fixed arm or causing the housing to be journalled to the gun bracket by a pivotal shaft.

The invention is further characterized by providing a manual operation hole for the screw shaft provided at the rear end portion of the pressure application driving body.

With the configuration of the invention described as above, it is possible to obtain the electric driving unit for X-type gun capable of rendering a spatter from the pressure application shaft and so forth to hardly enter the motor, sufficiently protecting the nut and the screw shaft, sufficiently enduring a bending stress from the arm during a welding operation, more stabilizing the holding of the gun, executing the welding operation with ease, excluding interfering with a workpiece or a jig, becoming small-sized, stabilizing the holding of the electric driving unit, and executing the maintenance thereof with reliability and ease.

Further, since the manual operation hole for the screw shaft is provided at the rear end portion of the pressure application driving body, it is possible to obtain the electric driving unit for X-type gun capable of rotating the screw shaft through the manual operation hole when power fails or the motor and the pressure application body are troubled, which is advantageous in maintenance thereof.

### BRIEF DESCRIPTION OF THE DRAWINGS

Fig. 1 is a schematic side view of an electric X-type gun provided with an electric driving unit in which a motor and a pressure application driving body are combined with each other according to an embodiment of the invention;
Fig. 2 is a plan view of the electric X-type gun in Fig. 1;
Fig. 3 is a longitudinal sectional view of the electric driving unit serving as a major element in Fig. 1;
Fig. 4 is a plan view of the electric driving unit in Fig. 3;
Fig. 5 is a schematic side view of an electric X-type gun provided with an electric driving unit in which a motor and a pressure application driving body are combined with each other according to another embodiment of the invention; and
Fig. 6 is a plan view of the electric X-type gun in Fig. 5.

### First Embodiment:

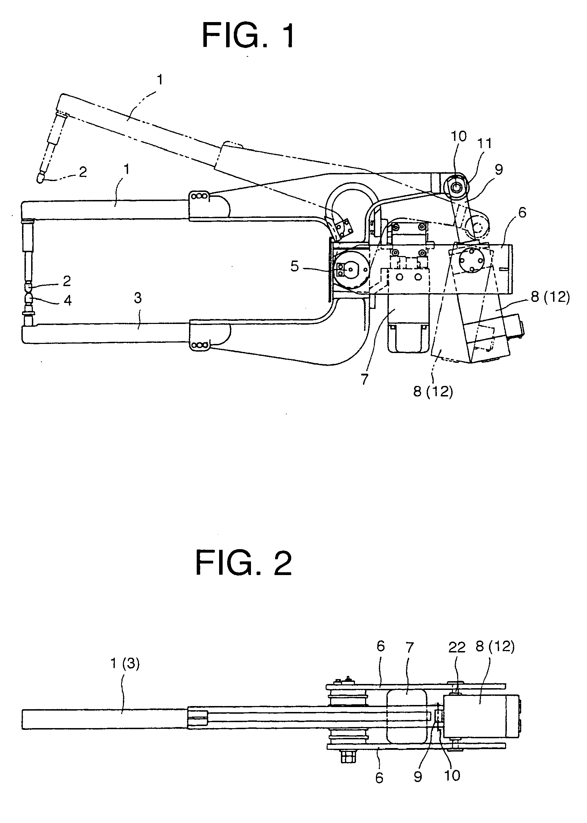

An electric driving unit for X-type gun according to the first embodiment of the invention is now described with reference to Fig. 1 to Fig. 4 of the attached drawings.

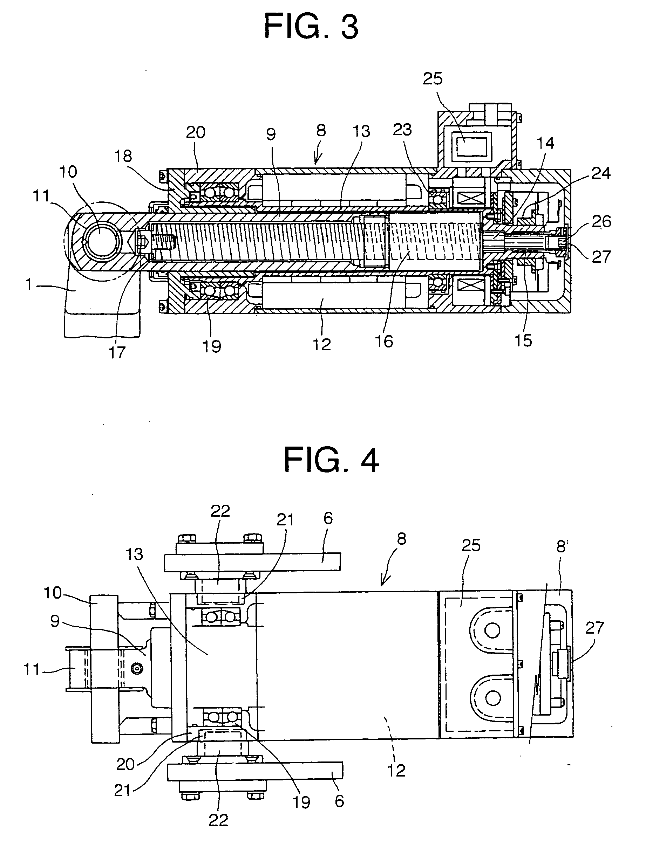

Fig. 1 is a schematic side view of the electric X-type gun provided with the electric driving unit in which a motor and a pressure application driving body are combined with each other, Fig. 2 is a plan view of the electric X-type gun in Fig. 1, Fig. 3 is a longitudinal sectional view of the electric driving unit serving as a major element in Fig. 1, and Fig. 4 is a plan view of the electric driving unit in Fig. 3.

In Fig. 1 and Fig. 2, denoted by 1 is a swing arm that is one gun arm provided with an electrode 2 at the tip end, 3 is a fixed arm that is the other gun arm provided with an electrode 4 at the tip end which is opposite to the electrode 2.

A middle portion of the swing arm 1 is pivotally supported by the tip end of a gun bracket 6 which is connected to a wrist of a robot (not shown) by a pivotal shaft 5. Further, the fixed arm 3 is fixed to the tip end of the gun bracket 6. Further, the fixed arm 3 is connected to the tip end of the gun bracket 6. An inverter transformer 7 is attached to and held by the gun bracket 6 behind the pivotal shaft 5.

A pressure application shaft 9 protruding from a pressure application driving body 8 is connected to the rear end of the swing arm 1 by a pivotal shaft 10 such as a hinge pin. Denoted by 11 is a bearing provided at the tip end of the pressure application shaft 9 for pivotally supporting the pivotal shaft 10.

Referring to Fig. 3 and Fig. 4, denoted by 12 is an electric motor which is positioned inside the pressure application driving body 8, wherein the electric motor 12 and the pressure application driving body 8 are combined with each other. A rotary shaft 13 which is a rotor of the electric motor 12 is formed of a hollow shaft, and a fixed part 15 is formed on an outer periphery of a screw shaft 14 such as a ball screw, for example, by fastening with a screw or wedge connection and so forth, and the screw shaft 14 is connected to a hollow part of the rotary shaft 13, by way of the fixed part 15, thereby integrating the rotary shaft 13 with the screw shaft 14. Further, a nut 16, for example, such as a ball nut is provided at the rear end side of the pressure application shaft 9, integrally or fastening with a screw and so forth, wherein a screw formed on the nut 16 is threaded with a screw of the screw shaft 14. The nut 16 provided at the rear end side of the pressure application shaft 9 is positioned inside the hollow part of the rotary shaft 13 so as to be reciprocated therein.

A hollow part 17 for containing the tip end side of the screw shaft 14 is formed inside the pressure application shaft 9. Further, the pressure application shaft 9 is guided by a guide bearing 18 which is provided at the front end side of the motor 12, thereby executing a linear reciprocal motion.

Denoted by 19 is a thrust bearing provided at the front portion of the motor so as to bear a load applied to the rotary shaft 13 of the electric motor 12 in the axial direction thereof. Bearings 21, 21 which are opened toward the gun bracket 6 are disposed in a housing 20 of the thrust bearing 19, wherein they constitute bearings for pivotally supporting the housing 20 and the gun bracket 6 by the pivotal shafts 22, 22.

Accordingly, the pressure application driving body 8 and the electric motor 12 are combined with each other and the bearings 11, 21 are provided in such a way that the tip end of the pressure application shaft 9 is connected to the swing arm 1 by the pivotal shaft 10 and the housing 20 provided at the front end side of the electric motor 12 is connected to the gun bracket 6 by the pivotal shafts 22, 22, thereby constituting the electric driving unit.

Denoted by 23 is a bearing provided at a rear portion of the motor 12, 24 is an encoder and 25 is a conductive coupling unit for coupling between the electric motor 12 and the encoder 24.

With the electric X-type gun having the configuration described as above, the pressure application shaft 9 is pulled inside the motor 12 at the maximum when the pressure application driving body 8 is rendered in a state shown in Fig. 3 so that the swing arm 1 is positioned in an open position as shown in an imaginary line in Fig. 1.

From this state, when the rotary shaft 13 is rotated by driving the motor 12, the screw shaft 14 integrated with the rotary shaft 13 is rotated, which rotation is transmitted to the screw of the nut 16 provided in the pressure application shaft 9 and threaded with the screw of the screw shaft 14, causing the pressure application shaft 9 to move forward so as to be sequentially pushed out from the pressure application driving body 8. The forward movement of the pressure application shaft 9 causes the swing arm 1 to swing about the pivotal shaft 5 serving as a fulcrum, thereby causing the swing and fixed arms 1, 3 to execute the closing operation to move the electrode 2 toward the electrode 4. When the pressure application shaft 9 is extended to be rendered in a state where the workpiece (not shown) is clamped between the electrodes 2 and 4, as shown in Fig. 1, the gun executes a welding operation upon receipt of the power from the transformer 7.

When the motor 12 is reversely driven to rotate the rotary shaft 13 in an opposite direction upon completion of the welding operation, the screw shaft 14 is rotated, which rotation is transmitted to the nut 16 at the pressure application shaft 9 side, causing the pressure application shaft 9 to move backward so as to be sequentially pulled in the pressure application driving body 8. The backward movement of the pressure application shaft 9 causes the swing arm 1 to swing about the pivotal shaft 5 serving as a fulcrum, thereby causing the swing and fixed arms 1 and 3 to execute the opening operation to move the electrode 2 away from the electrode 4. The swing arm 1 is positioned in the open position as shown in the imaginary line in Fig. 1 in a state where the pressure application shaft 9 is returned to the original position shown in Fig. 3.

Meanwhile, since the motor 12 for driving the pressure application shaft 9 is combined with the pressure application driving body 8 together with a part of the pressure application shaft 9, the gun is rendered to be compact and small, and there is no interference with the workpiece and jig. Further, the pressure application shaft 9 and the swing arm 1, and the housing 20 at the front end side of the motor and the gun bracket 6 are connected with each other, respectively, by the pivotal shafts 10, 22 such as a hinge pin, thereby causing the swinging motion of the swing arm 1 to be stabilized and executed naturally, and the attachment and detachment of these components as the electric driving unit to be executed with ease, and the maintenance thereof to be executed with ease and precision.

Still further, since the pressure application driving body 8 is provided with the pressure application shaft 9 having a part which is driven by the motor 12 and pulled into the motor 12 and the rotary shaft 13 of the motor 12 is formed of the hollow shaft while the screw shaft 14 is fixed inside the rotary shaft 13, the nut 16 threading with the screw shaft 14 is provided in the pressure application shaft 9, and the hollow part 17 in which the tip end side of the screw shaft 14 is contained is formed inside the pressure application shaft 9 so that the pressure application driving body 8 can be made short in the direction of the movement of the pressure application shaft 9, and the motor 12 can be rendered small-sized.

The part of the pressure application shaft 9 protruding from the motor 12 has no screw and the pressure application shaft 9 is guided by the guide bearing 18, so that the pressure application shaft 9 can sufficiently endure the bending stress from the swing arm 1 side during the welding operation, and further, a spatter and so forth from the pressure application shaft 9 hardly enters the motor 16. Still further, since the tip end side of the screw shaft 14 is positioned inside the hollow part 17 of the interior of the pressure application shaft 9, the nut 16 and the screw shaft 14 can be sufficiently protected.

### Second Embodiment:

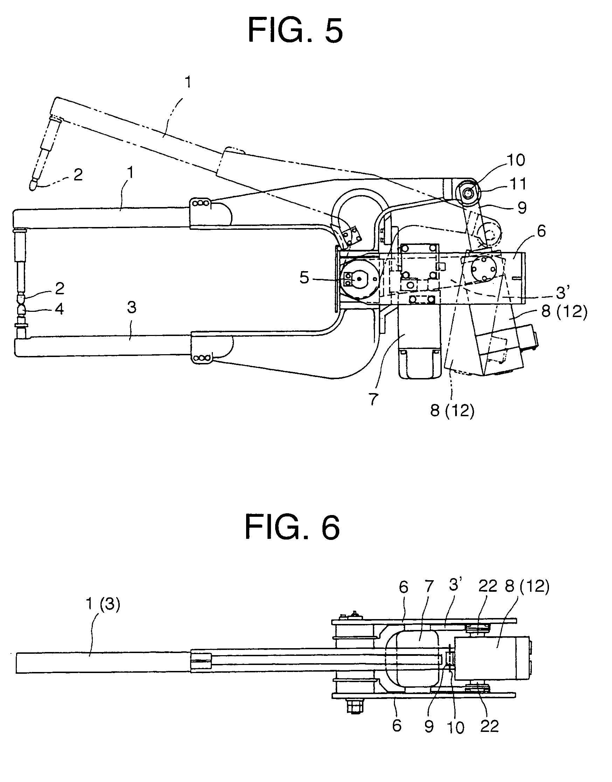

An electric driving unit for X-type gun according to the second embodiment of the invention is now described with reference to Fig. 5 and Fig. 6 of the attached drawings.

Fig. 5 is a schematic side view of an electric X-type gun provided with the electric driving unit in which a pressure application driving body and a motor are combined with each other and Fig. 6 is a plan view of the electric X-type gun in Fig. 5.

In the second embodiment, since the configuration of the electric driving unit in which the pressure application driving body and the motor are combined with each other is substantially the same as that shown in Fig. 3 and Fig. 4 of the first embodiment, the components thereof are denoted by the same reference numerals and the explanation thereof is omitted.

In Fig. 5 and Fig. 6, a rear end side 3' of a fixed arm 3 is extended backward inside a gun bracket 6, and the end portion of the rear end side 3' is connected to a housing 20 by pivotal shafts 22, 22 which are pivotally supported by a bearing 21 provided in the housing 20 at the front end side of the electric motor 12.

Accordingly, the electric driving unit is configured such that bearings 11, 21 are provided in such a way that the pressure application driving body 8 and the electric motor 12 are combined with each other, and the tip end of a pressure application shaft 9 is connected to a swing arm 1 by a pivotal shaft 10 while the housing 20 provided at the front end side of the electric motor 12 is connected to the rear end side 3' of the fixed arm 3 by the pivotal shafts 22, 22, thereby causing the swinging motion of the swing arm 1 to be stabilized and executed naturally, the attachment and detachment of the components as the electric driving unit to be executed with ease, and the maintenance thereof to be executed with very ease and accuracy.

### Third Embodiment:

In the first and second embodiments, as shown in Fig. 3 and 4, a manual operation hole 27 is provided in a cover case 8' forming the rear end portion of the pressure application driving body 8 toward a processing part 26 square or pentagonal in shape formed at the rear end of the screw shaft 14.

In the case of providing the manual operation hole 27, when the opening and closing operations of the gun arms are not executed because the pressure application shaft 9 is not moved due to power failure or trouble of the electric motor 12 and so forth, a tool is inserted through the manual operation hole 27 to rotate the processing part 26 so that the screw shaft 14 is rotated by the rotary force of the processing part 26, and the gun arms are opened and closed to move the gun arms to a desired position with ease, thereby obtaining the electric driving unit for X-type gun which is very advantageous in the maintenance thereof.

The processing part 26 square or pentagonal in shape formed at the rear end portion of the screw shaft 14 may be formed to protrude toward the rear end portion of the screw shaft 14 or to be pulled in the rear end portion of the screw shaft 14.

## Claims

1. An electric driving unit for X-type gun comprising two gun arms (1, 3) provided with electrodes (2, 4) at tip ends which are opposite to each other, wherein a middle portion of a swing arm (1) that is one gun arm is journalled to a gun bracket (6) by a pivotal shaft (5) while a rear end of the swing arm (1) is connected to a pressure application shaft (9) provided in a pressure application driving body (8), and a rear end of a fixed arm (3) that is the other gun arm is secured to the pressure application driving body (8) or the gun bracket (6), and wherein the pressure application driving body (8) and a motor (12) are combined with each other, said electric driving unit for X-type gun further comprising:
a rotary shaft (13) provided in the motor (12) and formed of a hollow shaft to which a screw shaft (14) is secured,
a guide bearing (18) provided at the front end side of the motor (12) for guiding the pressure application shaft (9);
said pressure application shaft (9) having:
a part to be driven by the motor (12) and pulled into the motor (12);
a hollow part (17) for containing therein a tip end side of the screw shaft (14);
a nut (16) to be threaded with the screw shaft (14); and
a bearing (11) provided at the front thereof for causing the rear end of the swing arm (1) to be journalled to the pressure application shaft (9) by a pivotal shaft (10);
said electric driving unit for X-type gun still further comprising:
a housing (20) provided at the front end of the motor (12);
a bearing (19) provided in the housing (20) for bearing a load applied to the rotary shaft (13) of the motor (12) in the axial direction thereof; and
a bearing (21) provided in the housing (20) for causing the housing (20) to be journalled to the fixed arm (3) or causing the housing (20) to be journalled to the gun bracket (6) by a pivotal shaft (22).

2. The electric driving unit for X-type gun according to Claim 1 further comprising a manual operation hole (27) for the screw shaft (14) provided at the rear end portion of the pressure application driving body (8).
